# EUROPÄISCHE PATENTSCHRIFT

(11) **EP 0 290 023 B1**
(45) Veröffentlichungstag und Bekanntmachung des Hinweises auf die Patenterteilung: **03.03.1993**
(21) Anmeldenummer: 88107235.9
(22) Anmeldetag: 05.05.1988
(51) Int. Cl.: H04L 12/26, H04L 12/44, H04J 3/14

(54) **Überwachungssystem für ein Lokales Bus-Netz in Sternstruktur**
Supervisory system for a local area bus network with a star structure
Système de surveillance pour un réseau local en bus à structure en étoile

(30) Priorität: 07.05.1987 DE 3715223
(43) Veröffentlichungstag der Anmeldung: 09.11.1988
(73) Patentinhaber: SIEMENS AKTIENGESELLSCHAFT, 80333 München (DE)
(72) Erfinder: Rau, Peter, Dr. Dipl.-Phys., D-8000 München 60 (DE)

(56) Entgegenhaltungen:
- EP-A- 0 140 609
- EP-A- 0 255 385
- INTERNATIONAL SWITCHING SYMPOSIUM 1987, 15.-20. März 1987, Phoenix, Arizona, Seiten 885-890, IEEE, New York, US; M. BURMEISTER et al.: "An experimental optical local area network using fast circuit switching"

## Beschreibung

Für eine schnelle Übertragung von Digitalsignalen zwischen wechselnden Gegenstellen (Stationen) in einem räumlich relativ eng begrenzten Bereich finden vielfach sogenannte Lokale Netze (LAN) Anwendung, in denen die zugehörigen Stationen nach Maßgabe einer Zugriffsregelung Zugang zu einem gemeinsamen Übertragungsmedium haben. Solche Lokale Netze werden üblicherweise nach ihrer Topologie und ferner nach der Art des Übertragungsmediums und nach Art des Zugriffsverfahrens voneinander unterschieden. Dabei unterscheidet man in topologischer Hinsicht im Prinzip zwischen Stern-Netzen, (ungerichteten) Linien-(Bus-)Netzen und (gerichteten) Ring-Netzen, wobei in Stern-Netzen der jeweilige Sternpunkt seinerseits linien-(bus-)artig oder ringartig ausgebildet sein kann.

In Multipunkt-Bussystemen, d.h. in Bussystemen mit Wired-OR-Sternpunkt, können Fehler einer peripheren Station, wie etwa ein Kurzschluß, zum Ausfall des gesamten Systems führen, was sich insbesondere bei im Zeitmultiplex betriebenen Systemen als sehr störend erweist. Man kann einem solchen Totalausfall zwar mit einer Doppelung des Bussystems begegnen, was allerdings entsprechend aufwendig ist.
Aus der nicht vorveröffentlichten, jedoch prioritätsälteren europäischen Patentanmeldung EP-A-0 255 385 ist für ein Bus-Netz in Sternstruktur, in dem Datenverarbeitungseinrichtungen jeweils über eine übertragungsrichtungsindividuelle Sternleitung und über eine Schalteinrichtung mit einem zentralen Sternpunkt verbunden sind, ein Zugriffsberechtigungsverfahren bekannt, bei dem mittels einer mit sämtlichen Sternleitungen verbundenen Entscheiderschaltung eine vorgegebene Zugriffsberechtigung für eine jeweilige Datenverarbeitungseinrichtung zum Verbindungsaufbau über den zentralen Sternpunkt zu einer anderen Datenverarbeitungseinrichtung gegeben ist. In diesem Bus-Netz ist zum Schutz gegen eine fehlerbedingte Dauerbelegung des zentralen Sternpunkts durch eine Datenverarbeitungseinrichtung eine Zeitbegrenzung für die Belegung vorgesehen. Dieses Zugriffsverfahren erfordert eine mit sämtlichen Sternleitungen verbundene zentrale Entscheidereinrichtung und läßt darüberhinaus keine weitergehenden Maßnahmen zur Verringerung der Fehlerwirkbreite erkennen.
In einem Bus-Netz in Sternstruktur mit Zusammenführung der einzelnen Sternleitungen in einem zentralen Sternpunkt ist es nach Lokalisieren des Fehlers auch möglich, die betroffene Sternleitung am Sternpunkt abzuschalten, was indessen bei im Zeitmultiplex betriebener Sternleitung immer noch mit einer relativ großen Fehlerwirkbreite verbunden ist.
So ist aus INTERNATIONAL SWITCHING SYMPOSIUM 1987, 15.-20. März 1987, Phoenix, Arizona, S.885 bis 890 ein lokales Bus-Netz in Sternstruktur auf optischer Basis bekannt, bei dem Teilnehmerstationen über eine jeweilige Sternleitung und eine jeweilige Schalteinrichtung auf einen zentralen Sternpunkt zugreifen können. Der Aufbau einer Verbindung zwischen zwei Teilnehmerstationen erfolgt durch Aussenden von Signalisierungszeichen von der rufenden Teilnehmerstation über den zentralen Sternpunkt an alle Teilnehmerstationen und Belegung von Zeitschlitzen. Nachdem die Signalisierung abgeschlossen ist, werden die gleichen Zeitschlitze, die zur Signalisierung benutzt wurden, zum Informationsaustausch benutzt. Die sternleitungsindividuellen Schalteinrichtungen werden am Sternpunkt durch eine allen Sternleitungen gemeinsame zentrale Überwachungseinrichtung nach Maßgabe der von den Teilnehmerstationen belegten Zeitschlitzen gesteuert. Teilnehmerstationen, die beispielsweise aufgrund eines technischen Defekts diese Zeitschlitze stören, werden von der Überwachungseinrichtung abgeschaltet. Bei diesem Bus-Netz macht es sich nachteilig bemerkbar, daß zum einen teilnehmerstationsbedingte Fehler sich auf den zentralen Sternpunkt auswirken können und damit die Übertragungsfähigkeit des gesamten Bus-Netzes beeinträchtigen können, zum anderen eine von der Konfiguration des Bus-Netzes abhängige Anpassung der zentralen Überwachungseinrichtung an die Anzahl der Sternleitungen erforderlich ist, des weiteren bei im Zeitmultiplex betriebenen Sternleitungen im Fehlerfall auch die nicht den Fehler verursachenden Übertragungskanäle abgeschaltet werden und darüber hinaus keine Maßnahmen ersichtlich sind, die während der Dauer einer Verbindung auftretenden Fehlern entgegenwirken.

Die Erfindung zeigt einen Weg zu einer demgegenüber verringerten Fehlerwirkbreite.

Die Erfindung betrifft ein Verfahren zur Verringerung der Fehlerwirkbreite stationsbedingter Fehler in einem Lokalen Bus-Netz in Sternstruktur mit Übertragungsrichtungsindividuellen Sternleitungen, insbesondere zu einem gemeinsamen Koppelstufeneingang führenden Zwischenleitungen einer Fernmeldevermittlungsanlage, bei dem die Sternleitungen am Sternpunkt auf ordnungsgemäße Funktion überwacht werden; dieses Überwachungssystem ist erfindungsgemäß dadurch gekennzeichnet, daß eine Sternleitungsindividuelle Überwachung vor dem Sternpunkt stattfindet derart, daß die von den peripheren Stationen zum zentralen Sternpunkt führenden Übertragungskanäle am Sternpunkt jeweils auf das Auftreten eines übertragungskanalindividuell von der jeweiligen Station her mit jedem Nutzsignalwort mitgeführten, den Übertragungskanal als belegt oder frei kennzeichnenden Kanalstatus-Signals überwacht werden, wobei nur nach Erkennung eines "Belegt"-Signals die im Übertragungskanal übertragenen Nutzsignalworte weitergeleitet werden und anderenfalls der betreffende Übertragungskanal am zentralen Sternpunkt empfangsseitig gesperrt wird.

Die Erfindung bringt den Vorteil einer Beschränkung der Wirkbreite stationsbedingter Fehler auch bei im Zeitmultiplex betriebenen Sternleitungen auf solche Übertragungskanäle mit sich, die vom Fehler tatsächlich betroffen sind, wobei solche gestörten Übertragungskanäle gesperrt werden, ohne daß es zu einer störenden Auswirkung auf das übrige Bussystem kommt. Darüber hinaus ist bei der Erfindung keine mit sämtlichen Sternleitungen verbundene zentrale Einrichtung erforderlich, womit bei Umkonfigurierungen des Netzes eine Anpassung einer sonst erforderlichen zentralen Einrichtung an eine jeweils neue Netzkonfiguration entfällt.

Dabei kann in weiterer Ausgestaltung der Erfindung in einem in den peripheren Stationen durch Voranstellen des jeweiligen Kanalstatus-Signals vor den einzelnen Nutzsignalworten zugehörigen Paritätsbits gebildeten und in Verbindung mit dem zugehörigen Nutzsignalwort über die Sternleitung übertragenen Kanalstatus-/Paritäts-Signal am zentralen Sternpunkt das Kanalstatus-Signal überwacht und das Nutzsignalwort zusammen mit dem Paritätsbit nur nach Erkennung des "Belegt"-Signals zur im Sternpunkt befindlichen Busleitung durchgeschaltet werden.

Bei ohnehin vorgesehener Übertragung von den einzelnen Nutzsignalworten zugehörigen Prioritätsbits entsprechender Länge bedarf es dabei für die Übertragung des Kanalstatus-Signals keiner zusätzlichen Übertragungskapazität, wenn in weiterer Ausgestaltung der Erfindung das in den peripheren Stationen einem dem einzelnen Nutzsignalwort zugehörigen Paritätsbit entsprechender Länge vorangestellte und in einem so gebildeten Kanalstatus-/Paritäts-Wort in Verbindung mit dem zugehörigen Nutzsignalwort über die Sternleitung übertragene jeweilige Kanalstatus-Signal am zentralen Sternpunkt überwacht und das entsprechend verzögerte Nutzsignalwort zugleich mit dem entsprechend verlängerten Paritätsbit nur nach Erkennung des "Belegt"-Signals zur im Sternpunkt befindlichen Busleitung durchgeschaltet wird.

Weitere Besonderheiten der Erfindung werden aus der nachfolgenden näheren Erläuterung der Erfindung anhand der Zeichnungen ersichtlich. Dabei zeigt
- FIG 1: ein Ausführungsbeispiel eines Überwachungssystems gemaß der Erfindung in schaltungstechnischen Einzelheiten;
- FIG 2: verdeutlicht Signalzustände darin.
- FIG 3: zeigt ein weiteres Ausführungsbeispiel eines Überwachungssystems gemäß der Erfindung, zu dem in
- FIG 4: Signalzustände verdeutlicht werden.

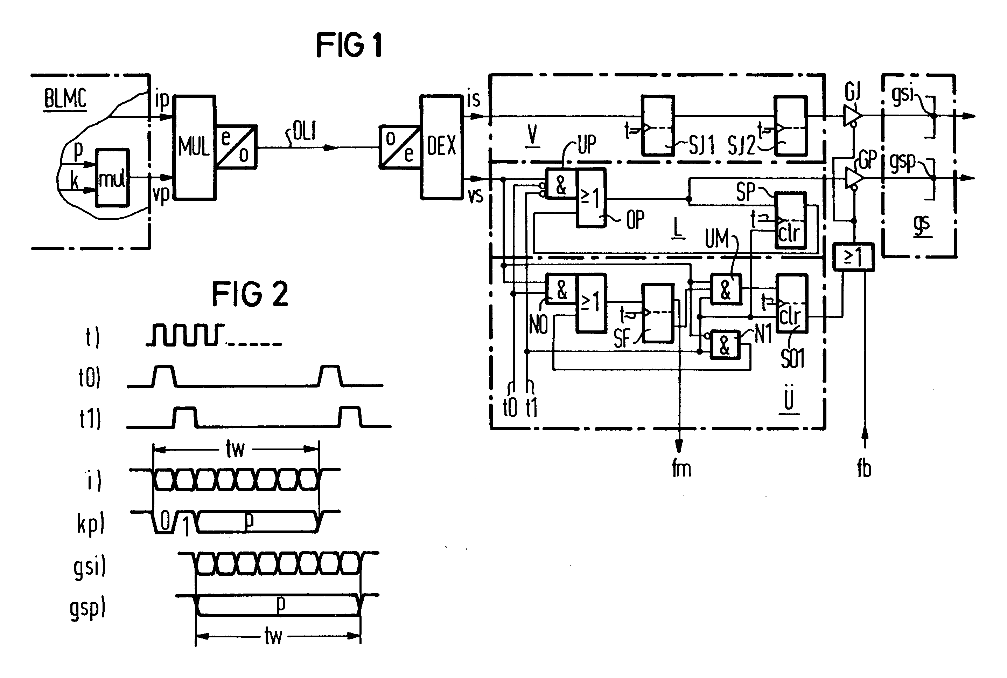

In der Zeichnung FIG 1 ist schematisch in einem zum Verständnis der Erfindung erforderlichen Umfang ein Lokales Bus-Netz in Sternstruktur dargestellt, in welchem übertragungsrichtungsindividuelle Sternleitungen ..., OLI,... von peripheren Stationen ...,BLMC,... zu einem zentralen Sternpunkt gs führen. Bei diesen Sternleitungen kann es sich um zu einem Eingang einer Koppelstufe einer Fernmelde-Vermittlungsanlage führende Zeitmultiplex-Zwischenleitungen handeln, beispielsweise in einem Breitband-ISDN-Digitalvermittlungssystem EWSD, wie es aus telcom report 9(1986)1, 8...14, Bilder 3 bis 5, bekannt ist, um innerhalb einer z.B. 384 Anschlüsse umfassenden Anschlußgruppe (Line Trunk Group) von einer z.B. 16 Anschlüsse umfassenden Anschlußeinheit (Broadband Line Unit) zu einem B-Kanal-Gruppenkoppler (Group Switch) führende Lichtwellenleiter. Der in einer solchen Sternleitung vorgesehene Lichtwellenleiter möge dabei, wie dies auch aus FIG 1 ersichtlich ist, von einem einem Multiplexer MUL nachgeschalteten elektrooptischen Wandler e/o zu einem einem Demultiplexer DEX vorgeschalteten optoelektrischen Wandler o/e führen. Im Multiplexer MUL mögen auf einer Nutzsignalleitung ip in einem z.B. 120 B-Kanäle zusammenfassenden 8-Mbit/s-Bitstrom auftretende (B-Kanal-)Nutzsignalworte mit auf einer Begleitsignalleitung vp auftretenden, jeweils einem Nutzsignalwort zugehörigen Begleitsignalworten im Multiplex zusammengefaßt werden; dabei mögen die Begleitsignalworte ihrerseits jeweils aus einem dem jeweiligen Nutzsignalwort zugehörigen Paritätsbit entsprechender Länge und einem in dieses am Anfang eingefügten, den Übertragungskanal als frei oder belegt kennzeichnenden Kanalstatus-Signal bestehen. In FIG 1 ist dazu angedeutet, daß das in der peripheren Station BLMC auf einer Paritätsbitleitung p auftretende Paritätsbit und das auf einer Statussignalleitung k auftretende Kanalstatus-Signal in einem Multiplexer mul zu einem entsprechenden Kanalstatus-/Paritäts-Wort zusammengefaßt werden. Ein solches mit einem Kanalstatus-Signal 01 und Paritätsbit P gebildetes Kanalstatus-/Paritäts-Wort, das in seiner Länge der Länge tw des zugehörigen, in FIG 2 in Zeile i) angedeuteten Nutzsignalworts entspricht, ist in FIG 2 in Zeile kp) angedeutet. Das Kanalstatus-Signal 01 möge dabei den betreffenden Übertragungskanal als belegt kennzeichnen; wenn dann ein Kanalstatus-Signal 11 den betreffenden Übertragungskanal als frei kennzeichnet, zeigen Kanalstatus-Signale 00 oder 10 einen Fehler an.

Das in der peripheren Station BLMC durch Voranstellen des jeweiligen Kanalstatus-Signals (01 bzw. 11) vor das dem jeweiligen Nutzsignalwort zugehörige Paritätsbit (P) gebildete Kanalstatus-/Paritäts-Wort wird in (durch den Multiplexer MUL vorgegebener Multiplex-)Verbindung mit dem zugehörigen Nutzsignalwort über die Sternleitung OLI übertragen. Nach dem Demultiplexen im Demultiplexer DEX tritt das in FIG 2 in Zeile i) angedeutete Nutzsignalwort am Nutzsignalausgang is auf, während gleichzeitig am Begleitsignalausgang vs das in FIG 2 in Zeile kp) angedeutete Kanalstatus-/Paritäts-Wort auftritt. Bevor Nutzsignal und zugehöriges Paritätsbit nun zum eigentlichen Sternpunkt gs gelangen, werden die von der peripheren Station BLMC zum zentralen Sternpunkt gs führenden Übertragungskanäle am Sternpunkt gs jeweils auf das Autreten der übertragungskanalindividuell von der Station BLMC her mitgeführten, den Übertragungskanal als belegt oder frei kennzeichnenden Kanalstatus-Signale überwacht, wobei nur nach Erkennen eines "Belegt"-Signals (01) das in Übertragungskanal übertragene Nutzsignal weitergeleitet und andernfalls der betreffende Übertragungskanal am zentralen Sternpunkt gs gesperrt wird:
Gemäß FIG 1 ist hierzu an die Begleitsignalleitung vs der Eingang einer Überwachungsschaltung Ü angeschlossen, die eine zwischen die Nutzsignalleitung is und die am Sternpunkt gs befindliche Nutzsignal-Busleitung gsi eingefügte Torschaltung (Ausgangstreiber) GJ und eine zwischen die Begleitsignalleitung vs und eine am Sternpunkt gs vorgesehene Begleitsignal-Busleitung gsp eingefügte Torschaltung GP nach Maßgabe des jeweiligen Kanalstatus-Signals steuert, wobei das Nutzsignalwort zusammen mit dem Paritätsbit nur nach Erkennung des "Belegt"-Signals (01) zur im Sternpunkt gs befindlichen Busleitung gsi bzw. gsp durchgeschaltet wird, während anderfalls der betreffende Übertragungskanal am zentralen Sternpunkt gs durch die dorthin führenden Torschaltungen GJ, GP gesperrt wird:
Tritt in der Zeitlage des ersten Signalelements des KanalstatusSignals kein Signalelement 0 und/oder in der Zeitlage des zweiten Signalelements des Kanalstatus-Signals kein Signalelement 1 auf, so wird in dem anhand von FIG 1 erläuterten Überwachungssystem in der Überwachungsschaltung Ü für ein eingangsseitig an die Begleitsignalleitung vs angeschlossenes UND-Glied N0, das von einer Taktsignalleitung t0 her mittels eines in FIG 2, Zeile t0), angedeuteten Taktsignals jeweils in der Zeitlage des ersten Kanalstatus-Signalelements enstriegelt wird, und/oder für ein mit seinem Sperreingang an die Begleitsignalleitung vs angeschlossenes Sperr-Glied N1, das von einer Signalleitung t1 her mittels eines in FIG 2, Zeile t1), angedeuteten Taktsignals jeweils in der Zeitlage des zweiten Kanalstatus-Signalelements entriegelt wird, die Koinzidenzbedingung erfüllt, was jeweils die Aktivierung eines durch ein bistabiles Kippglied SF gegebenen Fehrlerindikationsspeichers zur Folge hat.
Nur wenn dieses bistabile Kippglied SF in der Zeitlage des zweiten Kanalstatus-Signalelements nicht aktiviert ist, d.h. wenn zuvor ein Kanalstatus-Signalelement 0 aufgretreten ist, wird durch ein jetzt auftretendes Kanalstatus-Signalelement 1 für ein eingangsseitig an das bistabile Kippglied SF und die Begleitsignalleitung vs angeschlossenes UND-Glied U01, das von der Taktsignalleitung t1 her jeweils in der Zeitlage des zweiten KanalstatusSignalelements entriegelt wird, die Koinzidenzbedingung erfüllt, was die Aktivierung eines nachfolgenden, zunächst im Ruhezustand befindlichen bistabilen Kippgliedes S01 zur Folge hat. Solange dieses Kippglied S01 sich im Ruhezustand befindet, gibt es ein Sperrsignal an die zum Sternpunkt gs führenden Torschaltungen (Ausgangstreiber) GJ, GP ab. Nur wenn das Kippglied S01 aktiviert ist, wenn also im Beispiel das den gerade betrachteten Übertragungskanal als belegt kennzeichnende Kanalstatus-Signal 01 erkannt worden ist, werden die Torschaltungen GJ, GP übertragungsfähig, so daß das in dem Übertragungskanal gerade übertragene, während der Überprüfung des Kanalstatus-Signals in einer z.B. mit zwei bistabilen Kippgliedern SJ1, SJ2 gebildeten Verzögerungsschaltung V entsprechend verzögerte Nutzsignalwort zugleich mit dem zugehörigen Paritätswort in der aus den Zeilen gsi) und gsp) der FIG 2 ersichtlichen Zeitlager zur im Sternpunkt befindlichen Busleitung gsi bzw. gsp durchgeschaltet wird.
Wie dies auch aus FIG 2, Zeile gsp) ersichtlich ist, kann dabei das Paritätsbit P auf die volle Länge des Nutzsignalworts verlängert sein. In der in FIG 1 skizzierten Schaltungsanordnung wird dies mit Hilfe einer Verlängerungsschaltung L erreicht, in der das auf der Begleitsignalleitung vs auftretende Paritätsbit über ein von den Taktsignalleitungen t0 und t1 in der Zeitlage des Kanalstatus-Signals gesperrtes Sperr-Glied UP und ein nachfolgendes ODER-Glied 0P nicht nur zum Eingang der zum Sternpunkt gs führenden Torschaltung GP geleitet wird, sondern auch zu einem jeweils im Takt t1 des zweiten Kanalstatus-Signalelements in den Ruhezustand gestellten bistabilen Kippglied SP, dessen Ausgang zu dem zweiten Eingang des ODER-Gliedes 0P zurückgeführt ist.

In dem an Hand von FIG 1 erläuterten Ausführungsbeispiel eines Überwachungssystems gemäß der Erfindung, in dem übrigens die flankengesteuerten bistabilen Kippglieder SF, S01, SJ1, SJ2, SP jeweils an ihrem Takteingang t mit einem Taktsignal beaufschlagt sein mögen, wie es in FIG 2 in Zeile t) angedeutet ist, wird das jeweilige Kanalstatus-Signal (01 bzw. 11) in den peripheren Stationen (BLMC) einem dem einzelnen Nutzsignalwort zugehörigen Paritätsbit (P) entsprechender Länge vorangestellt und in einem so gebildeten Kanalstatus-/Paritätswort in Verbindung mit dem zugehörigen Nutzsignalwort über die Sternleitung (OLI) übertragen, und es werden nur nach Erkennung des "Belegt"-Signals (01) das entsprechend verzögerte Nutzsignalwort und zugleich damit das entsprechend verlängerte Paritätsbit jeweils zu einer eigenen, im Sternpunkt befindlichen Busleitung gsi bzw. gsp durchgeschaltet.

Die Erfindung ist indessen nicht daran gebunden, daß bei Erkennung des "Belegt"-Signals in einem in den peripheren Stationen gebildeten und in (Multiplex-)Verbindung mit dem zugehörigen Nutzsignalwort über die Sternleitung übertragenen Kanalstatus-/ParitätsSignal zusammen mit dem Nutzsignalwort ein von ihm getrenntes Paritätsbit, sei es nun von der Länge eines Signalelements oder, wie oben beschrieben, von der Länge des ganzen Nutzsignalworts, zum dabei empfangsseitig zwei getrennte Sternpunkt-Busleitungen aufweisenden Sternpunkt gs des Lokalen Bus-Netzes hin durchgeschaltet wird.

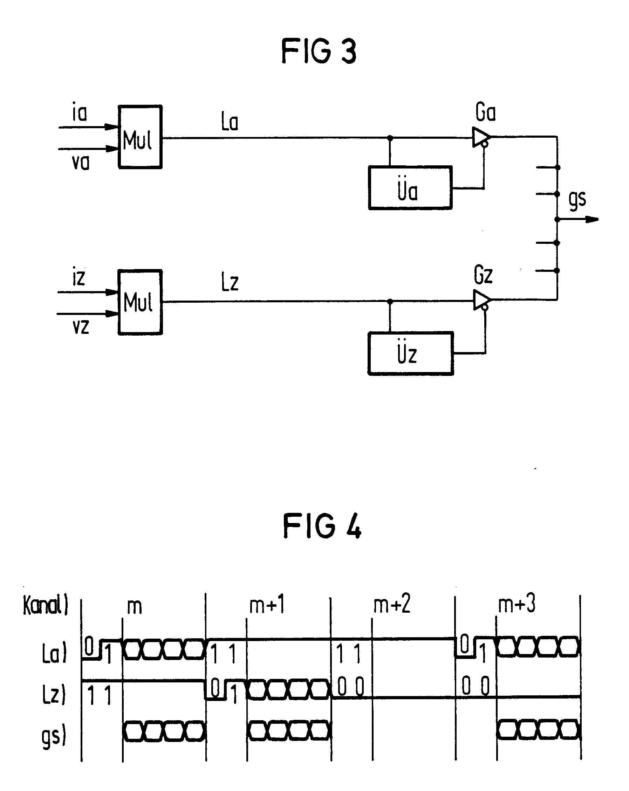

Es ist vielmehr auch möglich, im Zuge der Überwachung der von den peripheren Stationen vom zentralen Sternpunkt führenden Übertragungskanäle auf das Auftreten übertragungskanalindividuell von der jeweiligen Station her mitgeführter, den Übertragungskanal als belegt oder frei kennzeichnender Kanalstatus-Signale bei Erkennung eines "Belegt"-Signals lediglich jeweils das im Übertragungskanal übertragene Nutzsignalwort, das ggf. auch ein zugehöriges Paritätsbit miteinschliessen mag, zu einem empfangsseitig nur eine Sternpunkt-Busleitung aufweisenden Sternpunkt durchzuschalten und andernfalls den betreffenden Übertragungskanal am zentralen Sternpunkt emfangsseitig zu sperren, wie dies auch FIG 3 verdeutlicht:
In der Zeichnung FIG 3 ist schematisch ein Lokales Bus-Netz in Sternstruktur dargestellt, in welchem übertragungsrichtungsindividuelle Sternleitungen La, ...,Lz von peripheren Stationen zu einer zentralen Sternpunkt-Busleitung gs führen. In den peripheren Stationen mögen, was in FIG 3 durch dort vorgesehene Multiplexer Mul angedeutet wird, auf Statussignalleitungen va,...,vz anstehende Kanalstatus-Signale jeweils den auf Nutzsignalleitungen ia,...,iz auftretenden Nutzsignalworten vorangestellt werden. Die so von der jeweiligen peripheren Station her über die jeweilige Sternleitung La,...,Lz übertragungskanalindividuell mitgeführten, den jeweiligen Übertragungskanal als belegt oder frei kennzeichnenden Kanalstatus-Signale werden dann am Sternpunkt gs mit Hilfe von Überwachungsschaltung Üa,...,Üz überwacht, die im Prinzip in der aus FIG 1 ersichtlichen Weise aufgebaut sein können und die jeweils eine die jeweilige Sternleitung La,...,Lz mit der Sternpunkt-Busleitung gs verbindende Torschaltung (Ausgangstreiber) Ga,...,Gz steuern. Es wird dann wiederum jeweils nur nach Erkennung eines "Belegt"-Signals das im Übertragungskanal übertragene Nutzsignal weitergeleitet, während andernfalls der betreffende Übertragungskanal am zentralen Sternpunkt empfangsseitig gesperrt wird.

Hierzu sei ein Blick auf die Zeichnung FIG 4 geworfen, die für vier aufeinanderfolgende Zeitfächer m, m+1, m+2, m+3 die Übertragung von Digitalsignalen von den peripheren Stationen über die Sternleitungen La,..., Lz (in FIG 3) zum zentralen Sternpunkt gs (in FIG 3) verdeutlichen, wobei in Zeile La) Signalzustände auf der Sternleitung La (in FIG 3) und in Zeile Lz) Signalzustände auf der Sternleitung Lz (in FIG 3) angedeutet sind und in Zeile gs) die daraus resultierenden Signalzustände auf der Sternpunkt-Busleitung gs (in FIG 3) dargestellt sind:
Im Zeitfach m ist die Sternleitung La belegt, was durch das dem (hier mit 4 Bit angedeuteten) Nutzsignalwort vorangestellte Kanalstatus-Signal 01 angezeigt wird; gleichzeitig ist die Sternleitung Lz frei, was durch das Kanalstatus-Signal 11 angezeigt wird. Nach Erkennung des Kanalstatus-Signals 01 durch die Überwachungsschaltung Üa wird die Torschaltung Ga für das nachfolgende Nutzsignalwort entriegelt, so daß dieses, wie das auch in FIG 4 in Zeile gs) angedeutet ist, auf die Sternpunkt-Busleitung gs (in FIG 3) gelangt.
Im Zeitfach m+1 ist umgekehrt die Sternleitung La frei und die Sternleitung Lz belegt, womit jetzt in entsprechender Weise nach Erkennung des Kanalstatus-Signals 01 durch die Überwachungsschaltung Üz die Torschaltung Gz für das nachfolgende Nutzsignalwort entriegelt wird, so daß dieses, wie auch in FIG 4 in Zeile gs) angedeutet, auf die Sternpunkt-Busleitung gs gelangt.
Im Zeitfach m+2 ist die Sternleitung La wiederum frei, während die Sternleitung Lz jetzt fehlerbedingt, z.B. aufgrund eines Kurzschlusses, in der Zeitlage des Kanalstatus-Signals Signalelemente 00 führt; keine der Überwachungsschaltungen Üa, Üz spricht daher an, so daß im Zeitfach m+2 auch keine der Torschaltungen Ga, Gz entriegelt wird.
Im Zeitfach m+3 ist der über die Sternleitung Lz (in FIG 3) führende Übertragungskanal gemäß FIG. 4, Zeile Lz) ebenfalls fehlerbehaftet, während für die Sternleitung La (in FIG 3) gemäß FIG 4, Zeile La) mit dem Kanalstatus-Signal 01 der "Belegt"-Zustand signalisiert wird, so daß von der Überwachungsschaltung Üa her die Torschaltung Ga entriegelt wird und das in diesem Zeitfach über die Sternleitung La übertragene Nutzsignalwort auf die Sternpunkt Busleitung gs gelangt, wie dies auch aus Zeile gs) der FIG 4 ersichtlich ist.

Abschließend sei auf FIG 1 zurückgekommen und bemerkt, daß, wie dies auch in der Zeichnung angedeutet ist, bei Feststellung eines Kanalstatus-Fehlers dies auch über eine von der Überwachungsschaltung Ü wegführende Fehlermeldeleitung fm an eine übergeordnete Einrichtung gemeldet werden kann, wobei in entsprechender Weise von einer solchen übergeordneten Einrichtung über eine Steuerleitung fb auch ein Sperrsignal an die zum Sternpunkt gs führenden Torschaltungen Gj, Gp anschaltbar sein kann.

## Patentansprüche

1. Verfahren zur Verringerung der Fehlerwirkbreite stationsbedingter Fehler in einem Lokalen Bus-Netz in Sternstruktur (BLMC, OLI, gs) mit übertragungsrichtungsindividuellen Sternleitungen (OLI), insbesondere zu einem gemeinsamen Koppelstufeneingang (gs) führenden Zwischenleitungen (OLI) einer Fernmeldevermittlungsanlage, bei dem die Sternleitungen am Sternpunkt auf ordnungsgemäße Funktion überwacht werden,
**dadurch gekennzeichnet,**
daß eine Sternleitungsindividuelle Überwachung vor dem Sternpunkt stattfindet derart, daß die von den peripheren Stationen zum zentralen Sternpunkt führenden Übertragungskanäle jeweils auf das Auftreten eines übertragungskanalindividuell von der jeweiligen Station (BLMC) her mit jedem Nutzsignalwort mitgeführten, den Übertragungskanal als belegt oder frei kennzeichnenden Kanalstatus-Signals (01 bzw. 11) überwacht werden, wobei nur nach Erkennung eines "Belegt"-Signals (01) das im Übertragungskanal übertragene Nutzsignalwort weitergeleitet und anderenfalls der betreffende Übertragungskanal am zentralen Sternpunkt (gs) empfangsseitig gesperrt wird.

2. Verfahren nach Anspruch 1,
**dadurch gekennzeichnet,**
daß in einem in den peripheren Stationen (BLMC) durch Voranstellung des jeweiligen Kanalstatus-Signals (01 bzw. 11) vor den einzelnen Nutzsingalworten zugehörigen Paritätsbits (P) gebildeten und in Verbindung mit dem zugehörigen Nutzsignalwort über die Sternleitung (OLI) übertragenen Kanalstatus-/ Paritäts-Signal am zentralen Sternpunkt das Kanalstatus-Signal überwacht und das Nutzsignalwort zusammen mit dem Paritätsbit nur nach Erkennung des "Belegt"-Signals (01) zur im Sternpunkt (gs) befindlichen Busleitung (gsi; gsp) durchgeschaltet wird.

3. Verfahren nach Anspruch 2,
**dadurch gekennzeichnet,**
daß das in den peripheren Stationen (BLMC) einem dem einzelnen Nutzsignalwort zugehörigen Paritätsbit (P) entsprechender Länge vorangestellte und in einem so gebildeten Kanalstatus-/ParitätsWort in Verbindung mit dem zugehörigen Nutzsignalwort über die Sternleitung (OLI) übertragene jeweilige Kanalstatus-Signal (01 bzw. 11) am zentralen Sternpunkt (gs) überwacht und das entsprechend verzögerte Nutzsignalwort zugleich mit dem entsprechend verlängerten Paritätsbit nur nach Erkennung des "Belegt"-Signals (01) zur im Sternpunkt (gs) befindlichen Busleitung (gsi; gsp) durchgeschaltet wird.

## Claims

1. Method for reducing the fault penetration range of station-related faults in a local area bus network with a star structure (BLMC OLI, gs) having star lines (OLI) associated with specific transmission directions, preferably intermediate lines (OLI) of a telecommunications exchange leading to a common switching stage input (gs), in which the proper functioning of the star lines is monitored at the star point, characterised in that monitoring is carried out for the specific star lines before the star point in such a way that the transmission channels leading from the peripheral stations to the central star point are monitored in each case for the occurrence of a channel status signal (01 or 11) which is carried specifically for a transmission channel together with each information signal word from the respective station (BLMC) and which identifies the transmission channel as being busy or free, the information signal word transmitted in the transmission channel being forwarded only after a "busy" signal (01) has been detected, and otherwise the respective transmission channel being blocked at the receiving end at the central star point (gs).

2. Method according to Claim 1, characterised in that the channel status signal is monitored at the central star point in a channel status/parity signal which is formed in the peripheral stations (BLMC) by placing the respective channel status signal (01 or 11) before the parity bits (P) associated with the individual information signal words and is transmitted in conjunction with the associated information signal word via the star line (OLI), and the information signal word is switched through together with the parity bit to the bus line (gsi; gsp) situated in the star point (gs) only after the "busy" signal (01) has been detected.

3. Method according to Claim 2, characterised in that the respective channel status signal (01 or 11) is monitored at the central star point (gs), which signal is placed in the peripheral stations (BLMC) before a parity bit (P) of corresponding length associated with the individual information signal word and is transmitted in a channel status/parity word formed in this way in conjunction with the associated information signal word via the star line (OLI), and the correspondingly delayed information signal word is switched through at the same time as the correspondingly lengthened parity bit to the bus line (gsi; gsp) situated in the star point (gs) only after the "busy" signal (01) has been detected.

## Revendications

1. Procédé pour réduire l'étendue effective d'erreurs, conditionnées par des postes, dans un réseau local de bus à structure en étoile (BLMC,OLI,gs) comportant des lignes en étoile (OLI) prévues individuellement pour chaque sens de transmission, notamment des lignes intermédiaires (OLI) d'une installation de commutation de télécommunication, qui aboutissent à une entrée commune (gs) d'étages de couplage, et selon lequel le fonctionnement des lignes en étoile est contrôlé au point neutre pour déterminer s'il est correct,
caractérisé par le fait qu'un contrôle individuel pour chaque ligne en étoile est exécuté en amont du neutre de telle sorte que les canaux de transmission reliant les postes périphériques au neutre central sont contrôlés en ce qui concerne respectivement l'apparition d'un signal d'état de canal (01 ou 11) qui, individuellement pour chaque canal de transmission, est transmis simultanément avec le mot de signal utile à partir de chaque poste (BLMC) et caractérise le canal de transmission comme étant occupé ou libre, auquel cas le mot de signal utile transmis dans le canal de transmission est retransmis uniquement après l'identification d'un signal "occupé" (01) et, dans un autre cas, le canal de transmission considéré est bloqué, côté réception, au niveau du neutre central (gs).

2. Procédé suivant la revendication 1, caractérisé par le fait
que dans un signal d'état de canal/de parité formé dans les postes périphériques (BLMC) par insertion du signal respectif d'état de canal (01 ou 11) en avant de bits de parité (P) associés aux mots individuels de signaux utiles, est transmis en liaison avec le mot associé de signal utile par l'intermédiaire de la ligne en étoile (OLI), au niveau du neutre central, et le mot de signal utile est transmis, ainsi que le bit de parité, uniquement après l'identification du signal "occupé" (01), à la ligne formant bus (gsi;gsp) située au neutre (gs).

3. Procédé suivant la revendication 2, caractérisé par le fait que le signal respectif d'état de canal (01 ou 11), qui est inséré dans les postes périphériques (BLMC) en avant d'un bit de parité (P) associé qui est associé au mot individuel de signal utile et possède une longueur correspondante et est transmis, dans un mot d'état de canal/de parité ainsi formé, avec le mot associé de signal utile par l'intermédiaire de la ligne en étoile (OLI), est contrôlé au niveau du neutre central (gs) et le mot de signal utile retardé de façon correspondante est transmis en même temps que le bit de parité prolongé de façon correspondante uniquement après l'identification du signal "occupé" (01), à la ligne formant bus (gsi; gsp) situé au niveau du neutre (gs).
